# EUROPEAN PATENT SPECIFICATION

(11) **EP 3 435 615 B1**
(45) Date of publication and mention of the grant of the patent: **14.04.2021**
(21) Application number: 16895780.1
(22) Date of filing: 28.03.2016
(51) Int. Cl.: H04L 29/06, H04L 12/24, H04L 29/08

(54) **NETWORK SERVICE IMPLEMENTATION METHOD, SERVICE CONTROLLER, AND COMMUNICATION SYSTEM**
VERFAHREN ZUR IMPLEMENTIERUNG EINES NETZWERKDIENSTES, DIENSTSTEUERGERÄT UND KOMMUNIKATIONSSYSTEM
PROCÉDÉ D'IMPLÉMENTATION DE SERVICE DE RÉSEAU, CONTRÔLEUR DE SERVICE, ET SYSTÈME DE COMMUNICATION

(43) Date of publication of application: 30.01.2019
(73) Proprietor: Huawei Technologies Co., Ltd., Longgang District Shenzhen, Guangdong 518129 (CN)
(72) Inventor: MA, Jingwang, Shenzhen Guangdong 518129 (CN); WANG, Yuan, Shenzhen Guangdong 518129 (CN); ZHU, Fenqin, Shenzhen Guangdong 518129 (CN)
(74) Representative: Goddar, Heinz J.
(86) International application number: PCT/CN2016/077465
(87) International publication number: WO 2017/165999

(56) References cited:
- CN-A- 1 537 392
- CN-A- 101 359 999
- CN-A- 102 037 702
- CN-A- 105 306 418
- US-A1- 2008 243 993
- US-B1- 8 260 940
- Anonymous: "Hypertext Transfer Protocol - Wikipedia", , 16 March 2016 (2016-03-16), XP055555585, Retrieved from the Internet: URL:https://en.wikipedia.org/w/index.php?t itle=Hypertext_Transfer_Protocol&oldid=710 322655 [retrieved on 2019-02-12]

## Description

### TECHNICAL FIELD

The present invention relates to the field of communications technologies, and in particular, to a network service implementation method, a service controller, and a communications system.

### BACKGROUND

With continuous development of network technologies, a communications system provides more types of network services for a user. For example, the network services may include mobility management, bearer management, location management, and the like.

In the prior art, a plurality of network elements are deployed in a communications system. The network elements may include a mobility management entity (Mobility Management Entity, MME for short), a serving gateway (Serving Gateway, S-GW for short), a packet data network gateway (Packet Data Network Gateway, P-GW for short), and the like. When a network service needs to be implemented in the communications system, processing logic of the plurality of network elements and a procedure of interaction between the plurality of network elements are usually set based on a feature of the network service that needs to be implemented, and the plurality of network elements jointly implement one network service. When a user needs to obtain a network service, the user sends a corresponding service request message to a network side of the communications system. After the network side receives the service request message sent by the user, the network side determines a plurality of network elements corresponding to the service request message, and transfers the service request message between the plurality of network elements. The plurality of network elements successively process the service request message, to complete the network service requested by the user.

However, in the foregoing process, because cooperation between a plurality of network elements is required to complete one network service, when the user requests, by using the service request message, to obtain the network service, the service request message needs to be transferred between the plurality of network elements and processed by the plurality of network elements. This process is complex and takes relatively long duration, resulting in low efficiency in providing the network service by the communications system for the user.

US 2008/243993 A1 discloses a service controller for providing centralized service management, control and placement, as well as guaranteed failover, in a dynamic and distributed computing environment. The service controller works in conjunction with a computing resource supply manager, which supplies the required resources so that the service controller can run the service on the allocated resources. The number of active service instances may dynamically increase or decrease in accordance with changing availability of or demand for resources. The service controller monitors the service instances and takes appropriate action in the event of service instance failures.; The service controller is provided with a service director component, which records and tracks, for each service instance which has been started on a particular resource/host, the IP address of such host, through a name location service, thus allowing end-users to locate the service regardless of where the service instances are physically running.

Anonymous: "Hypertext Transfer Protocol - Wikipedia", 16 March 2016, Retrieved from the Internet: URL:https://en.wikipedia.org/w/index.php?title=Hypertext_Transfer_Protocol&oldid =710322655 [retrieved on 2019-02-12] discloses details of the Hypertext Transfer Protocol (HTTP)

US8260940 discloses a computer-implemented system and method for managing service requests. The system includes a service provider, having a number of server devices, that provides a service response in response to a client service request. The service response includes a service instance ID associated with a server and a connection lease. A communication processing component routes a first client service request to one of the servers. Subsequent client service requests and responses are transmitted directly between the client device and the server device associated with service instance ID included in the first service response for the duration of the connection lease.

### SUMMARY

Embodiments of the present invention provide a network service implementation method, a service controller, and a communications system, to improve efficiency in providing a network service.

According to a first aspect, an embodiment of the present invention provides a network service implementation method according to independent claim 1. Further embodiments of the method are described in dependent claims 2-5.

According to a second aspect, an embodiment of the present invention provides a service controller for a communications system according to independent claim 6. Further embodiments of the service controller are described in dependent claims 7-9.

According to a third aspect, an embodiment of the present invention provides a communications system according to independent claim 10. Another embodiment of the communications system is described in dependent claim 11.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a diagram of a network architecture of a communications system according to the present invention;
FIG. 2 is a schematic structural diagram 1 of a communications system according to the present invention;
FIG. 3 is a schematic structural diagram 2 of a communications system according to the present invention;
FIG. 4 is a flowchart of a network service implementation method according to the present invention;
FIG. 5 is a schematic structural diagram 1 of a service controller according to the present invention;
FIG. 6 is a schematic structural diagram 2 of a service controller according to the present invention; and
FIG. 7 is a schematic diagram of a hardware structure of a service controller according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

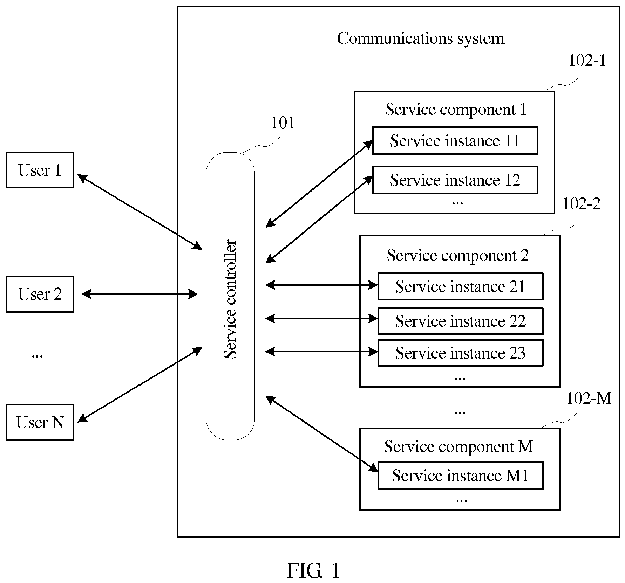

FIG. 1 is a diagram of a network architecture of a communications system according to the present invention. Referring to FIG. 1, the communications system includes a service controller 101 and M service components (102-1 to 102-M), each service component corresponds to one network service, and one service component includes at least one service instance. A service instance of a service component may be obtained by deploying the service component in the communications system, and the service instance provides a corresponding network service for a user. A plurality of service instances of a same service component provide a same network service for the user. The plurality of service instances of the same service component may be deployed on a same hardware device, or may be deployed on different hardware devices. In an actual application process, when the user needs to obtain a network service from a network side, the user sends a service request to the service controller. The service controller forwards the service request to a corresponding service instance based on a type of the network service corresponding to the service request. The service instance processes the service request, to provide the corresponding network service for a client. The communications system, a network service implementation method, and an apparatus provided in the present invention are described below in detail by using specific embodiments.

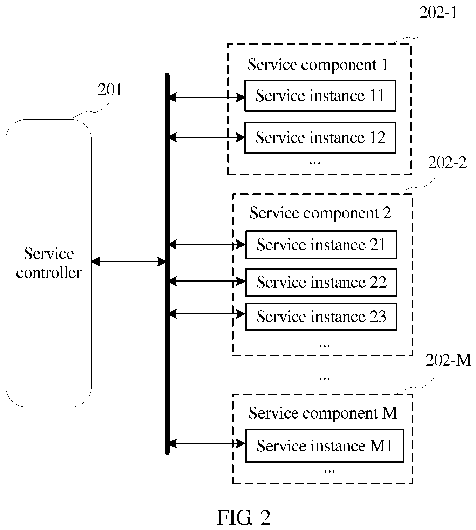

FIG. 2 is a schematic structural diagram 1 of a communications system according to the present invention. Referring to FIG. 2, the communications system includes a service controller 201 and at least one service component (202-1 to 202-M), and each service component includes at least one service instance.

The service controller is configured to: receive a service request message including a message identifier; determine a target service component corresponding to the message identifier; determine a target service instance from at least one service instance of the target service component; and send the service request message to the target service instance. The service instance is configured to: receive the service request message sent by the service controller, and process the service request message.

In this embodiment of the present invention, one service component corresponds to one network service, and each service component may be implemented by using software, or each service component may be implemented by using software and hardware. In an actual application process, to improve a rate of providing a service for a user, a plurality of service instances may be deployed in the communications system for each service component, and the plurality of service instances separately provide a network service for the user. For example, a service component 1 corresponds to a bearer management service. Three service instances of the service component 1 may be deployed in the communications system, and are respectively denoted as a service instance 1 to a service instance 3. The three service instances provide the bearer management service for the user. If the communications system can provide the bearer management service for 1000 users, the service instance 1 may provide the bearer management service for a user 1 to a user 300, the service instance 2 may provide the bearer management service for a user 301 to a user 750, and the service instance 3 may provide the bearer management service for a user 751 to a user 1000.

In this embodiment of the present invention, a message identifier in a network service request may indicate a type of the request message. Optionally, the message identifier may be indicated by using a preset code identifier (for example, a protocol identification identifier). One network service corresponds to one service component, and one network service corresponds to one or more message identifiers.

For example, in a process in which a service control center provides a location management service for the user, messages exchanged between the user and the service control center may include a network attach request message and a network detach request message. A message identifier included in the network attach request message is message-001, and a message identifier included in the network detach request message is message-002. Then, if a service component corresponding to the network service is a service component 1, a correspondence among the location management service, the message identifiers, and the service component may be shown in Table 1. Certainly, in an actual application process, there may also be a one-to-one correspondence among a network service, a message identifier, and a service component, for example, a correspondence shown in Table 1 that is among a bearer management service, a message identifier, and a service component.

**Table 1**

| **Network service** | **Message identifier** | **Service component** |
|---|---|---|
| Location management service | Message-001 | Service component 1 |
| Location management service | Message-002 | Service component 1 |
| Bearer management service | Message-003 | Service component 2 |
| ··· | ··· | ··· |

The following describes in detail a working process of the communications system shown in the embodiment of FIG. 1.

When the user needs to obtain a network service in the communications system, the user sends a service request message including a message identifier to the service controller. After receiving the service request message, the service controller determines a target service component corresponding to the message identifier.

After determining that the target service component is obtained, the service controller obtains at least one service instance corresponding to the target service component, and determines a target service instance from the at least one service instance. Specifically, if the target service component corresponds to only one service instance, the service controller directly determines the service instance as the target service instance; or if the target service component corresponds to a plurality of (more than one) service instances, the service controller selects one service instance from the plurality of service instances as the target service instance. Optionally, the service controller may randomly select one service instance from the plurality of service instances as the target service instance, or may determine a service instance with highest idleness as the target service instance based on idleness of each service instance. It should be noted that in an actual application process, when the target service component corresponds to a plurality of (more than one) service instances, the target service instance may be further selected from the plurality of service instances by using another method. This is not specifically limited in the present invention.

After determining that the target service instance is obtained from the at least one service instance corresponding to the target service component, the service controller forwards the received service request message to the target service instance. After the target service instance receives the service request message sent by the service controller, the target service instance processes the service request message, to provide a corresponding service for the user that sends the service request message.

The communications system provided in this embodiment of the present invention includes a plurality of service components, each service component includes at least one service instance, and the service instance provides a network service for the user. In the system, a network service can be provided for the user by using one service instance, and cooperation between a plurality of network elements is not required, so that a quantity of message exchange times is reduced, and time required for providing the network service for the user is shortened, thereby improving efficiency in providing the network service by the communications system for the user. Further, when a network service in the communications system needs to be changed (for example, upgrading an existing network service or adding a new network service to the communications system), only a service component corresponding to the network service needs to be changed without a need to change processing logic of a plurality of network elements in the communications system and a procedure of interaction between the plurality of network elements. This process is simple and convenient, and reduces network service maintenance costs.

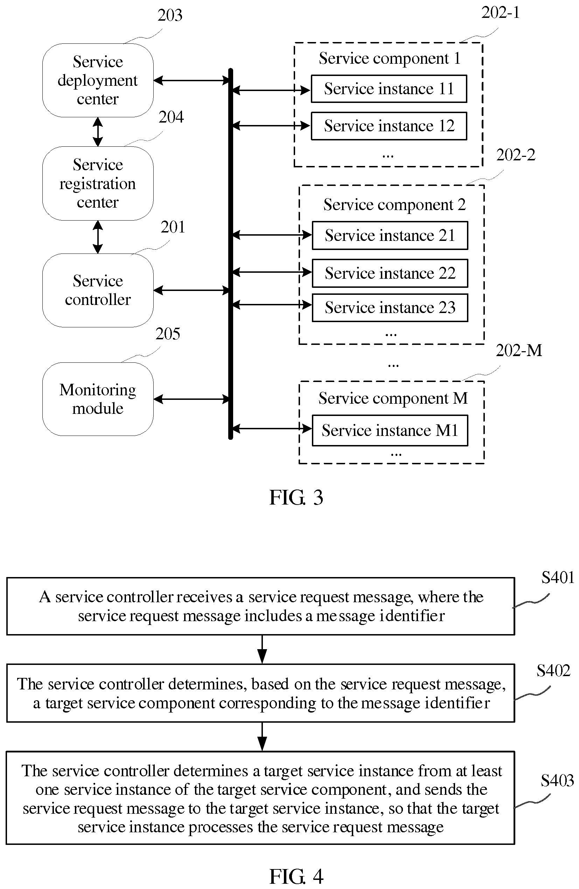

Based on the embodiment shown in FIG. 2, to facilitate maintenance of the communications system, service deployment information and a service registration center may be added to the communications system. The following further describes the communications system by using an embodiment shown in FIG. 3.

FIG. 3 is a schematic structural diagram 2 of a communications system according to the present invention. Based on the embodiment shown in FIG. 2, referring to FIG. 3, the communications system further includes a service deployment center 203 and a service registration center 204.

The service deployment center is configured to: determine a correspondence between a service component in the communications system and a message identifier, and send the correspondence to the service registration center. Correspondingly, the service registration center is configured to receive and store the correspondence sent by the service deployment center.

The service deployment center is further configured to: obtain a service requirement corresponding to each service component in the communications system, deploy at least one service instance for each service component in the communications system based on the service requirement corresponding to each service component, and send the service instance included in each service component and attribute information of each service instance to the service registration center. Correspondingly, the service registration center is configured to receive and store the service instance included in each service component and the attribute information of each service instance that are sent by the service deployment center, and the attribute information includes a network address of the service instance.

The following describes working processes of the service deployment center and the service registration center in detail.

When a new network service needs to be added to the communications system, the service deployment center obtains a service component corresponding to the network service that needs to be added, determines a correspondence between the service component and a message identifier of the network service, and sends the correspondence to the service registration center. When receiving the correspondence, the service registration center stores the correspondence.

After the service deployment center determines that the service component is obtained, the service deployment center obtains a network requirement for the network service in the communications system; determines, based on the network requirement, a quantity of service instances that need to be deployed in the communications system; deploys the corresponding quantity of service instances on a hardware device in the communications system; determines attribute information of each service instance, for example, a network address of the service instance; and sends a service instance included in each service component and the attribute information of each service instance to the service registration center. After receiving the service instance included in each service component and the attribute information of each service instance, the service registration center stores the service instance included in each service component and the attribute information of each service instance.

For example, when a network service (a location management service) needs to be added to the communications system, the service deployment center obtains a message identifier (network service 1) of the location management service and a service component 1 that can implement the location management service, determines a correspondence between the service component 1 and the network service 1, and sends the correspondence to the service registration center. The service registration center stores the correspondence.

If one service instance of the service component 1 can provide the location management service for 300 users, and the communications system has 1000 users, four service instances may be deployed in the communications system. The service deployment center may deploy the service component 1 on a hardware device 1 to obtain a service instance 1 and a service instance 2, deploy the service component 1 on a hardware device 2 to obtain a service instance 3 and a service instance 4, and separately obtain attribute information of the service instance 1 to the service instance 4, such as network addresses of the service instance 1 to the service instance 4. For example, the network address of the service instance 1 may be an IP address of the hardware device 1 and a port number of the service instance 1 on the hardware device 1. After completing deployment of the service component 1, the service deployment center sends, to the service registration center, the service instance 1 to the service instance 4 included in the service component 1 and the attribute information of the service instance 1 to the service instance 4. The service registration center stores the information.

After the service deployment center and the service registration center are added to the communications system, the service controller is specifically configured to: after the service controller receives the service request message including the message identifier, obtain the correspondence between a message identifier and a service component from the service registration center, and determine, based on the correspondence and the message identifier in the service request message, a target service component corresponding to the message identifier; and then obtain, from the service registration center, the at least one service instance included in the target service component, determine the target service instance from the at least one service instance, and send the service request message to the target service instance.

In an actual application process, the service deployment center may further add a service instance to an existing service component in the communications system, or delete a service instance, and the service deployment center may further change attribute information of an existing service instance, for example, change a network address of the service instance. After the service deployment center changes a service instance of a service component or attribute information of a service instance, the service deployment center sends a change notification to the service registration center, so that the service registration center changes the service instance of the service component or the attribute information of the service instance.

In an actual application process, to improve reliability of the communications system, a monitoring module 205 may be further deployed in the communications system, and the monitoring module 205 may be configured to: obtain a working status of the service instance in the communications system, and generate a fault notification message when the working status of the service instance is an abnormal state. Further, the monitoring module may further collect statistics of parameters such as a quantity of running times of each service instance and running duration of each service instance, to evaluate performance of the communications system.

FIG. 4 is a flowchart of a network service implementation method according to the present invention. Referring to FIG. 4, the method may include the following steps:

S401. A service controller receives a service request message, where the service request message includes a message identifier.

S402. The service controller determines, based on the service request message, a target service component corresponding to the message identifier.

S403. The service controller determines a target service instance from at least one service instance of the target service component, and sends the service request message to the target service instance, so that the target service instance processes the service request message.

In this embodiment of the present invention, there is a correspondence among a network service, a message identifier, and a service component. The correspondence is described in detail in the embodiment shown in FIG. 2, and details are not described herein again.

When a user needs to obtain a network service in a communications system, the user sends a service request message including a message identifier to a service controller, and the service controller determines, based on a correspondence between a message identifier and a service component, and the message identifier included in the service request message, a target service component corresponding to the message identifier. After determining that the target service component is obtained, the service controller obtains at least one service instance corresponding to the target service component, determines a target service instance from the at least one service instance, and forwards the received service request message to the target service instance. Optionally, the service controller may obtain a network address of the target service instance, and send the service request message to the target service instance based on the network address. The network address includes at least one of an Internet Protocol IP address, a Media Access Control MAC address, and a port number. After the target service instance receives the service request message sent by the service controller, the target service instance processes the service request message, to provide a corresponding service for the user that sends the service request message.

In the network service implementation method provided in this embodiment of the present invention, after the service controller receives the service request message including the message identifier, the service controller determines, based on the service request message, the target service component corresponding to the message identifier, determines the target service instance from the at least one service instance of the target service component, and sends the service request message to the target service instance, so that the target service instance processes the service request message. In this process, a network service can be provided for the user by using one service instance, and cooperation between a plurality of network elements is not required, so that a quantity of message exchange times is reduced, and time required for providing the network service for the user is shortened, thereby improving efficiency in providing the network service by the communications system for the user.

Based on the embodiment shown in FIG. 4, when the user needs to obtain the network service, the user may need to exchange a message with a service instance for a plurality of times before obtaining the corresponding network service. In a process of obtaining one network service by the user, a service request message sent by the user to the service instance for a first time is a trigger message, and a service request message sent to the service instance for a time other than the first time is a process message. For example, if the user needs to exchange a message with a service instance 1 eight times before obtaining a network service 1, in a process of obtaining the network service 1 by the user by using the service instance 1, a message sent by the user to the service instance 1 at a first time is a trigger message, and all messages sent by the user to the service instance 1 at a second time to an eighth time are process messages.

In an actual application process, based on different service request message types (a trigger message or a process message), processes in which the service controller determines the target service instance from the at least one service instance of the target service component are also different. Specifically, there are the following two feasible implementations.

In a feasible implementation, a type of the service request message is a trigger message.

When the type of the service request message is a trigger message, the service controller determines any one of the at least one service instance as the target service instance; or the service controller obtains idleness of each of the at least one service instance, and determines a service instance with highest idleness as the target service instance.

In this feasible implementation, idleness of a service instance is a ratio of a remaining service capability of the service instance to a total service capability of the service instance. For example, the service instance can provide a network service for 100 users. If the service instance is currently providing the network service for 70 users, the service instance can further provide the network service for 30 users. In this case, the idleness of the service instance is 30%.

In this feasible implementation, the service request message may further include a terminal identifier. After the service controller determines that the target service instance is obtained, the service controller determines and stores a first correspondence among the terminal identifier, the target service component, and the target service instance.

For example, after receiving a service request message 1 whose service type is a trigger message, the service controller determines, as a service component 1, a target service component corresponding to a message identifier included in the service request message 1. The service component 1 includes three service instances, which are respectively denoted as a service instance 1 to a service instance 3. If a current idleness of the service instance 1 is 40%, a current idleness of the service instance 2 is 60%, and a current idleness of the service instance 3 is 45%, the service controller determines the service instance 2 with highest idleness as the target service instance. Further, the service controller may obtain a terminal identifier (terminal 1) included in the service request message 1, determine a first correspondence among the terminal 1, the service component 1, and the service instance 2, and store the correspondence.

In another feasible implementation, a type of the service request message is a process message.

When the type of the service request message is a process message, the service request message further includes a terminal identifier, and the service controller obtains a second correspondence among a terminal identifier, a service component, and a service instance, and determines the target service instance based on the second correspondence, the terminal identifier in the service request message, and the target service component.

In this feasible implementation, after the service controller determines that the target service instance is obtained, and sends the service request message to the target service instance, the service controller determines whether a network service ends. If a determining result is that the network service ends, the service controller removes, from the second correspondence, a correspondence among the terminal identifier in the service request message, the target service component, and the target service instance.

Optionally, whether the network service ends may be determined in the following manner: The service controller determines whether a process message having a same terminal identifier and a same message identifier is received within preset duration, and if yes, determines that the network service ends. For example, it is assumed that a terminal identifier included in a service request message sent by a user to the service controller is terminal 1, and a message identifier is network service 1, so that the user obtains a network service 1. After the service controller sends a network service message to the target service instance, if the service controller does not receive, within preset duration (for example, 5 minutes), a service request message including the terminal 1 and the network service 1, the service controller determines that the network service 1 ends.

For example, after receiving a service request message 2 whose service type is a process message, the service controller determines, as a service component 1, a target service component corresponding to a message identifier included in the service request message 2. Then, it is assumed that a terminal identifier included in the service request message 2 is terminal 2. The service controller obtains a second correspondence stored in the service controller that is among a terminal identifier, a service component, and a service instance, and determines, from the second correspondence based on the terminal identifier (terminal 2) and the service component (the service component 1), a service instance corresponding to the terminal 2 and the service component 1 as a target service instance.

In the foregoing two feasible implementations, optionally, for convenience of identifying the type of the service request message by the service controller, the service request message may include the type of the service request message.

In this embodiment of the present invention, in a network service, a service instance generates data of a user in this network service during any message exchange between the user and the service instance, and data generated during previous message exchange in this network service may be used in subsequent message exchange. For example, in a process in which a service instance 1 provides a network service 1 for a user 1, the service instance 1 needs to exchange information with the user 1 five times before completing the network service 1. Data is generated in each information exchange between the service instance 1 and the user 1. When the service instance 1 exchanges information with the user 1 for a second time, data generated when the service instance 1 exchanges information with the user 1 for a first time may be used.

In this embodiment, the service controller determines the target service instance from the at least one service instance of the target service component in different manners based on different service request message types. In this way, it can be ensured that a same service instance provides a network service for a same user in a network service process, thereby avoiding a problem that a correct network service cannot be provided for the user due to a data loss caused when a plurality of service instances provide a network service for a same user in a network service process.

The following describes in detail the network service implementation method shown in this embodiment of the present invention by using a specific example.

For example, it is assumed that a user needs to obtain a network service 1 from the communications system, and the user needs to exchange information with a service component corresponding to the network service 1 five times before obtaining the network service 1.

In a first information exchange process, the user 1 sends a service request message 1 to the service controller by using a terminal 1, and the service request message 1 includes a message identifier (network service 1) and a terminal identifier (terminal 1).

After receiving the service request message 1, the service controller determines the service request message 1 as a trigger message based on a message type in the service request message 1. The service controller determines a target service component corresponding to the network service 1 as a service component 1 based on the network service 1 and a correspondence between a message identifier and a service component, obtains three service instances of the service component 1, which ar**e respectively denoted as a service instance 1 to a service instance 3,** and obtains idle rates of the service instance 1 to the service instance 3. If idleness of the service instance 1 is 50%, idleness of the service instance 2 is 30%, and idleness of the service instance 3 is 60%, the service controller determines the service instance 3 with highest idleness as a target service instance.

After determining that the target service instance (the service instance 3) is obtained, the service controller sends the service request message 1 to the service instance 3, and the service instance 3 processes the service request message 1. The service controller records and stores a first correspondence among the terminal 1, the network service 1, and the service instance 3.

In a second information exchange process, the user 1 sends a service request message 2 to the service controller by using the terminal 1, and the service request message 2 includes a message identifier (network service 1), a terminal identifier (terminal 1), and a message type (process message).

After receiving the service request message 2, the service controller determines the service request message 2 as a process message based on the message type in the service request message 2. The service controller obtains, based on the stored first correspondence among the terminal 1, the network service 1, and the service instance 3, the target service instance (the service instance 3) corresponding to the terminal 1 and the network service 1, and sends the service request message 2 to the service instance 3. The service instance 3 processes the service request message 2. If the service controller determines that the network service 1 has not ended, the service controller does not delete the first correspondence.

It should be noted that a third information exchange process to a fifth information exchange process are similar to the second information exchange process, and details are not described herein again.

After the fifth information exchange process is performed, if the service controller determines that the network service 1 ends, the service controller deletes the first correspondence.

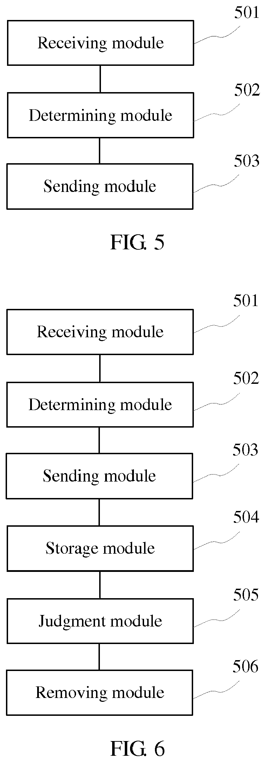

FIG. 5 is a schematic structural diagram 1 of a service controller according to the present invention. The service controller is applied to a communications system, the communications system includes the service controller and at least one service component, one service component corresponds to one network service, and each service component includes at least one service instance. Referring to FIG. 5, the service controller includes:
a receiving module 501, configured to receive a service request message, where the service request message includes a message identifier;
a determining module 502, configured to: determine, based on the service request message, a target service component corresponding to the message identifier, and determine a target service instance from at least one service instance of the target service component; and
a sending module 503, configured to send the service request message to the target service instance, so that the target service instance processes the service request message.

In an actual application process, when a type of the service request message is a trigger message, the trigger message is a message for triggering a network service, and the determining module 502 may be specifically configured to:
determine any one of the at least one service instance as the target service instance; or
obtain idleness of each of the at least one service instance, and determine a service instance with highest idleness as the target service instance.

FIG. 6 is a schematic structural diagram 2 of a service controller according to the present invention. Based on the embodiment shown in FIG. 5, referring to FIG. 6, the service controller may further include a storage module 504.

The determining module 502 may be further configured to determine a first correspondence among a terminal identifier, the target service component, and the target service instance after the sending module 503 sends the service request message to the target service instance. The service request message further includes the terminal identifier.

The storage module 504 is configured to store the first correspondence among the terminal identifier, the target service component, and the target service instance.

In an actual application process, when a type of the service request message is a process message, the process message is a message that is sent by a user after the user sends a trigger message and that is used to obtain a network service, the service request message further includes a terminal identifier, and the determining module 502 may be further specifically configured to:
obtain a second correspondence among a terminal identifier, a service component, and a service instance; and
determine the target service instance based on the second correspondence, the terminal identifier in the service request message, and the target service component.

Further, the service controller may further include a judgment module 505 and a removing module 506.

The judgment module 505 is configured to: after the sending module sends the service request message to the target service instance, determine whether the network service ends.

The removing module 506 is configured to remove, from the second correspondence, a correspondence among the terminal identifier in the service request message, the target service component, and the target service instance when the judgment module determines that the network service ends.

Optionally, the sending module 503 may be specifically configured to:
obtain a network address of the target service instance, where the network address includes at least one of an Internet Protocol IP address, a Media Access Control MAC address, and a port number; and
send the service request message to the target service instance based on the network address.

The service controller described in this embodiment of the present invention may execute the technical solutions shown in the foregoing method embodiment, implementation principles and beneficial effects thereof are similar, and details are not described herein again.

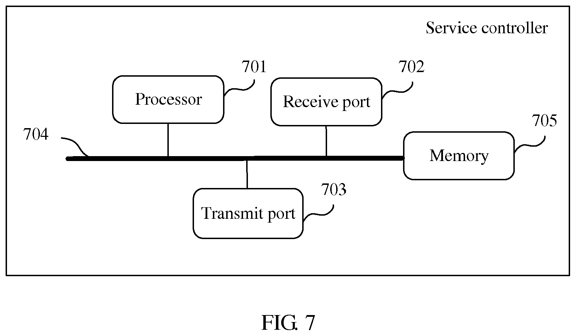

FIG. 7 is a schematic diagram of a hardware structure of a service controller according to an embodiment of the present invention. Referring to FIG. 7, the service controller includes a processor 701, a receive port 702, a transmit port 703, a communications bus 704, and a memory 705. The communications bus 704 is configured to implement communication connection between components, the memory 705 may store various programs, and the processor 701 completes various processing functions and implements method steps in this embodiment by executing the programs stored in the memory 705. Specifically:

The processor 701 receives a service request message by using the receive port 702, and the service request message includes a message identifier.

The processor 701 determines, based on the service request message, a target service component corresponding to the message identifier, and determines a target service instance from at least one service instance of the target service component.

The processor 701 sends the service request message to the target service instance by using the transmit port 703, so that the target service instance processes the service request message.

In an actual application process, when a type of the service request message is a trigger message, the processor 701 may specifically determine the target service instance from the at least one service instance in the following feasible implementation:
determining any one of the at least one service instance as the target service instance; or
obtaining idleness of each of the at least one service instance, and determining a service instance with highest idleness as the target service instance.

In an actual application process, after sending the service request message to the target service instance by using the transmit port 703, the processor 701 further determines a first correspondence among a terminal identifier, the target service component, and the target service instance, and the service request message further includes the terminal identifier.

The processor 701 stores, in the memory 705, the first correspondence among the terminal identifier, the target service component, and the target service instance.

In an actual application process, when a type of the service request message is a process message, the processor 701 may specifically determine the target service instance from the at least one service instance in the following feasible implementation:
obtaining a second correspondence among a terminal identifier, a service component, and a service instance; and
determining the target service instance based on the second correspondence, a terminal identifier in the service request message, and the target service component.

Further, after sending the service request message to the target service instance by using the transmit port 703, the processor 701 further determines whether a network service ends.

When determining that the network service ends, the processor 701 removes, from the second correspondence, a correspondence among the terminal identifier in the service request message, the target service component, and the target service instance.

Optionally, the processor 701 may send the service request message to the target service instance in the following feasible implementation. Specifically, the processor 701 obtains a network address of the target service instance, and sends the service request message to the target service instance based on the network address. The network address includes at least one of an Internet Protocol IP address, a Media Access Control MAC address, and a port number.

The service controller described in this embodiment of the present invention may execute the technical solutions shown in the foregoing method embodiment, implementation principles and beneficial effects thereof are similar, and details are not described herein again.

Persons of ordinary skill in the art may understand that all or some of the steps of the method embodiment may be implemented by a program instructing relevant hardware. The program may be stored in a computer readable storage medium. When the program runs, the steps of the method embodiment are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments, without departing from the scope of the technical solutions of the embodiments of the present invention, as defined in the appended claims.

## Claims

1. A network service implementation method, applied to a communications system that provides network services including mobility management, bearer management and/or location management, wherein the communications system comprises a service controller (101, 201) and at least one service component (202), one service component corresponds to one network service, and each service component comprises at least one service instance; and
the method comprises:
receiving, by the service controller (101, 201), a service request message, wherein the service request message comprises a message identifier;
determining, by the service controller (101, 201) based on the service request message, a target service component (102, 202) corresponding to the message identifier; and determining, by the service controller (101, 201), a target service instance from at least one service instance of the target service component (102, 202), and sending, by the service controller, the service request message to the target service instance, so that the target service instance processes the service request message,
wherein a type of the service request message is a trigger message, the trigger message is a message for triggering a network service, wherein the determining, by the service controller (101, 201), a target service instance from at least one service instance of the target service component (102, 202) comprises: obtaining, by the service controller, idleness of each of the at least one service instance, and determining a service instance with highest idleness as the target service instance.

2. The method according to claim 1, wherein the service request message further comprises a terminal identifier, and after the sending, by the service controller (101, 201), the service request message to the target service instance, the method further comprises:
determining and storing, by the service controller (101, 201), a first correspondence among the terminal identifier, the target service component (102, 202), and the target service instance.

3. The method according to claim 1, wherein a type of the service request message is a process message, the process message is a message that is sent by a user (300-301, 750-751, 1000) after the user sends a trigger message and that is used to obtain a network service, the service request message further comprises a terminal identifier, and the determining, by the service controller (101, 201), a target service instance from at least one service instance of the service component (102, 202) comprises:
obtaining, by the service controller (101, 201), a second correspondence among a terminal identifier, a service component (102, 202), and a service instance; and
determining, by the service controller (101, 201), the target service instance based on the second correspondence, the terminal identifier in the service request message, and the target service component (102, 202).

4. The method according to claim 3, wherein after the sending, by the service controller (101, 201), the service request message to the target service instance, the method further comprises:
determining, by the service controller (101, 201), whether the network service ends; and
removing, by the service controller (101, 201) from the second correspondence, a correspondence among the terminal identifier in the service request message, the target service component (102, 202), and the target service instance if a determining result is that the network service ends.

5. The method according to claims 1 to 4, wherein the sending, by the service controller (101, 201), the service request message to the target service instance comprises:
obtaining, by the service controller (101, 201), a network address of the target service instance, wherein the network address comprises any one or any combination of the following:
an Internet Protocol IP address, a Media Access Control MAC address, and a port number; and
sending, by the service controller (101, 201), the service request message to the target service instance based on the network address.

6. A service controller (101, 201) for a communications system that provides network services including mobility management, bearer management and/or location management, wherein the service controller comprises:
a receiving module (501), configured to receive a service request message, wherein the service request message comprises a message identifier;
a determining module (502), configured to:
determine, based on the service request message, a target service component (102, 202) corresponding to the message identifier, and determine a target service instance from at least one service instance of the target service component; and
a sending module (503), configured to send the service request message to the target service instance, so that the target service instance processes the service request message,
wherein a type of the service request message is a trigger message, the trigger message is a message for triggering a network service,
wherein the determining module (502) is specifically configured to obtain idleness of each of the at least one service instance, and determine a service instance with highest idleness as the target service instance.

7. The service controller (101, 201) according to claim 6, wherein the service controller further comprises a storage module (504);
the determining module (502) is further configured to determine a first correspondence among a terminal identifier, the target service component (102, 202), and the target service instance after the sending module (503) sends the service request message to the target service instance, wherein the service request message further comprises the terminal identifier; and
the storage module (504) is configured to store the first correspondence among the terminal identifier, the target service component (102, 202), and the target service instance.

8. The service controller (101, 201) according to claim 6, wherein a type of the service request message is a process message, the process message is a message that is sent by a user (300-301, 750-751, 1000) after the user sends a trigger message and that is used to obtain a network service, the service request message further comprises a terminal identifier, and the determining module (502) is further specifically configured to:
obtain a second correspondence among a terminal identifier, a service component (102, 202), and a service instance; and
determine the target service instance based on the second correspondence, the terminal identifier in the service request message, and the target service component (102, 202).

9. The service controller (101, 201) according to claims 6 to 8, wherein the sending module (503) is specifically configured to:
obtain a network address of the target service instance, wherein the network address comprises any one or any combination of the following:
an Internet Protocol IP address, a Media Access Control MAC address, and a port number; and
send the service request message to the target service instance based on the network address.

10. A communications system that provides network services including mobility management, bearer management and/or location management, the communications system comprising a service controller (101, 201) and at least one service component (202), wherein one service component corresponds to one network service, and each service component comprises at least one service instance;
the service controller (101, 201) is configured to:
receive a service request message comprising a message identifier;
determine a target service component (102, 202) corresponding to the message identifier;
determine a target service instance from at least one service instance of the target service component (102, 202); and
send the service request message to the target service instance; and
the service instance is configured to:
receive the service request message sent by the service controller (101, 201), and process the service request message,
wherein a type of the service request message is a trigger message, the trigger message is a message for triggering a network service,
wherein the determining module (502) is specifically configured to obtain idleness of each of the at least one service instance, and determine a service instance with highest idleness as the target service instance.

11. The system according to claim 10, wherein the system further comprises a service deployment center (203) and a service registration center (204);
the service deployment center (203) is configured to:
determine a correspondence between a service component (102, 202) in the communications system and a message identifier, and send the correspondence to the service registration center (204);
the service registration center (204) is configured to receive and store the correspondence sent by the service deployment center (203); and
the service controller (101, 201) is configured to:
receive the service request message comprising the message identifier;
obtain the correspondence from the service registration center (204);
determine, based on the correspondence, the target service component (102, 202) corresponding to the message identifier;
determine the target service instance from the at least one service instance of the target service component (102, 202); and
send the service request message to the target service instance.

## Patentansprüche

1. Netzwerkdienstimplementierungsverfahren, das auf ein Kommunikationssystem angewendet wird, das Netzwerkdienste, einschließlich Mobilitätsverwaltung, Trägerverwaltung und/oder Standortverwaltung, bereitstellt, wobei das Kommunikationssystem ein Dienststeuergerät (101, 201) und mindestens eine Dienstkomponente (202) umfasst, eine Dienstkomponente einem Netzwerkdienst entspricht und jede Dienstkomponente mindestens eine Dienstinstanz umfasst; und das Verfahren umfasst:
Empfangen, durch das Dienststeuergerät (101, 201), einer Dienstanforderungsnachricht, wobei die Dienstanforderungsnachricht einen Nachrichtidentifikator umfasst;
Bestimmen, durch das Dienststeuergerät (101, 201) basierend auf der Dienstanforderungsnachricht, einer Zieldienstkomponente (102, 202) entsprechend dem Nachrichtidentifikator und
Bestimmen, durch das Dienststeuergerät (101, 201), einer Zieldienstinstanz aus mindestens einer Dienstinstanz der Zieldienstkomponente (102, 202) und Senden, durch das Dienststeuergerät, der Dienstanforderungsnachricht an die Zieldienstinstanz, sodass die Zieldienstinstanz die Dienstanforderungsnachricht verarbeitet,
wobei ein Typ der Dienstanforderungsnachricht eine Auslösenachricht ist, wobei die Auslösenachricht eine Nachricht zum Auslösen eines Netzwerkdiensts ist,
wobei das Bestimmen, durch das Dienststeuergerät (101, 201), einer Zieldienstinstanz aus mindestens einer Dienstinstanz der Zieldienstkomponente (102, 202) umfasst: Erhalten, durch das Dienststeuergerät, einer Inaktivität von jeder der mindestens einen Dienstinstanz und Bestimmen einer Dienstinstanz mit der höchsten Inaktivität als die Zieldienstinstanz.

2. Verfahren nach Anspruch 1, wobei die Dienstanforderungsnachricht ferner einen Endgerätidentifikator umfasst, und nach dem Senden, durch das Dienststeuergerät (101, 201), der Dienstanforderungsnachricht an die Zieldienstinstanz das Verfahren ferner umfasst:
Bestimmen und Speichern, durch das Dienststeuergerät (101, 201), einer ersten Entsprechung zwischen dem Endgerätidentifikator, der Zieldienstkomponente (102, 202) und der Zieldienstinstanz.

3. Verfahren nach Anspruch 1, wobei ein Typ der Dienstanforderungsnachricht eine Prozessnachricht ist, die Prozessnachricht eine Nachricht ist, die durch einen Benutzer (300-301, 750-751, 1000) gesendet wird, nachdem der Benutzer eine Auslösenachricht sendet und diese zum Erhalten eines Netzwerkdiensts verwendet wird, die Dienstanforderungsnachricht ferner einen Endgerätidentifikator umfasst und das Bestimmen, durch das Dienststeuergerät (101, 201), einer Zieldienstinstanz aus mindestens einer Dienstinstanz der Dienstkomponente (102, 202) umfasst:
Erhalten, durch das Dienststeuergerät (101, 201), einer zweiten Entsprechung zwischen einem Endgerätidentifikator, einer Dienstkomponente (102, 202) und einer Dienstinstanz und
Bestimmen, durch das Dienststeuergerät (101, 201), der Zieldienstinstanz basierend auf der zweiten Entsprechung, dem Endgerätidentifikator in der Dienstanforderungsnachricht und der Zieldienstkomponente (102, 202).

4. Verfahren nach Anspruch 3, wobei nach dem Senden, durch das Dienststeuergerät (101, 201), der Dienstanforderungsnachricht an die Zieldienstinstanz das Verfahren ferner umfasst:
Bestimmen, durch das Dienststeuergerät (101, 201), ob der Netzwerkdienst endet; und Entfernen, durch das Dienststeuergerät (101, 201) aus der zweiten Entsprechung, einer Entsprechung zwischen dem Endgerätidentifikator in der Dienstanforderungsnachricht, der Zieldienstkomponente (102, 202) und der Zieldienstinstanz, wenn ein Bestimmungsergebnis darin besteht, dass der Netzwerkdienst endet.

5. Verfahren nach Anspruch 1 bis 4, wobei das Senden, durch das Dienststeuergerät (101, 201), der Dienstanforderungsnachricht an die Zieldienstinstanz umfasst:
Erhalten, durch das Dienststeuergerät (101, 201), einer Netzwerkadresse der Zieldienstinstanz, wobei die Netzwerkadresse ein beliebiges oder jede Kombination von Folgendem umfasst:
eine Internetprotokolladresse, IP-Adresse, eine Medienzugriffssteuerungsadresse, MAC-Adresse, und eine Port-Nummer; und
Senden, durch das Dienststeuergerät (101, 201), der Dienstanforderungsnachricht an die Zieldienstinstanz basierend auf der Netzwerkadresse.

6. Dienststeuergerät (101, 201) für ein Kommunikationssystem, das Netzwerkdienste, einschließlich Mobilitätsverwaltung, Trägerverwaltung und/oder Standortverwaltung, bereitstellt, wobei das Dienststeuergerät umfasst:
ein Empfangsmodul (501), das zum Empfangen einer Dienstanforderungsnachricht ausgelegt ist, wobei die Dienstanforderungsnachricht einen Nachrichtidentifikator umfasst;
ein Bestimmungsmodul (502), das ausgelegt ist zum:
Bestimmen, basierend auf der Dienstanforderungsnachricht, einer Zieldienstkomponente (102, 202) entsprechend dem Nachrichtidentifikator und Bestimmen einer Zieldienstinstanz aus mindestens einer Dienstinstanz der Zieldienstkomponente; und
ein Sendemodul (503), das zum Senden der Dienstanforderungsnachricht an die Zieldienstinstanz ausgelegt ist, sodass die Zieldienstinstanz die Dienstanforderungsnachricht verarbeitet,
wobei ein Typ der Dienstanforderungsnachricht eine Auslösenachricht ist, wobei die Auslösenachricht eine Nachricht zum Auslösen eines Netzwerkdiensts ist,
wobei das Bestimmungsmodul (502) insbesondere zum Erhalten einer Inaktivität von jeder der mindestens einen Dienstinstanz und Bestimmen einer Dienstinstanz mit der höchsten Inaktivität als die Zieldienstinstanz konfiguriert ist.

7. Dienststeuergerät (101, 201) nach Anspruch 6, wobei das Dienststeuergerät ferner ein Speichermodul (504) umfasst;
wobei das Bestimmungsmodul (502) ferner zum Bestimmen einer ersten Entsprechung zwischen einem Endgerätidentifikator, der Zieldienstkomponente (102, 202) und der Zieldienstinstanz ausgelegt ist, nachdem das Sendemodul (503) die Dienstanforderungsnachricht an die Zieldienstinstanz sendet, wobei die Dienstanforderungsnachricht ferner den Endgerätidentifikator umfasst; und
wobei das Speichermodul (504) zum Speichern der ersten Entsprechung zwischen dem Endgerätidentifikator, der Zieldienstkomponente (102, 202), und der Zieldienstinstanz ausgelegt ist.

8. Dienststeuergerät (101, 201) nach Anspruch 6, wobei ein Typ der Dienstanforderungsnachricht eine Prozessnachricht ist, die Prozessnachricht eine Nachricht ist, die durch einen Benutzer (300-301, 750-751, 1000) gesendet wird, nachdem der Benutzer eine Auslösenachricht sendet und diese zum Erhalten eines Netzwerkdiensts verwendet wird, die Dienstanforderungsnachricht ferner einen Endgerätidentifikator umfasst und das Bestimmungsmodul (502) ferner insbesondere ausgelegt ist zum:
Erhalten einer zweiten Entsprechung zwischen einem Endgerätidentifikator, einer Dienstkomponente (102, 202) und einer Dienstinstanz und
Bestimmen der Zieldienstinstanz basierend auf der zweiten Entsprechung, dem Endgerätidentifikator in der Dienstanforderungsnachricht und der Zieldienstkomponente (102, 202).

9. Dienststeuergerät (101, 201) nach Anspruch 6 bis 8, wobei das Sendemodul (503) insbesondere ausgelegt ist zum:
Erhalten einer Netzwerkadresse der Zieldienstinstanz, wobei die Netzwerkadresse ein beliebiges oder jede Kombination von Folgendem umfasst:
eine Internetprotokolladresse, IP-Adresse, eine Medienzugriffssteuerungsadresse, MAC-Adresse, und eine Port-Nummer; und
Senden der Dienstanforderungsnachricht an die Zieldienstinstanz basierend auf der Netzwerkadresse.

10. Kommunikationssystem, das Netzwerkdienste, einschließlich Mobilitätsverwaltung, Trägerverwaltung und/oder Standortverwaltung, bereitstellt, das Kommunikationssystem umfassend ein Dienststeuergerät (101, 201) und mindestens eine Dienstkomponente (202), wobei eine Dienstkomponente einem Netzwerkdienst entspricht und jede Dienstkomponente mindestens eine Dienstinstanz umfasst; wobei das Dienststeuergerät (101, 201) ausgelegt ist zum:
Empfangen einer Dienstanforderungsnachricht umfassend einen Nachrichtidentifikator;
Bestimmen einer Zieldienstkomponente (102, 202) entsprechend dem Nachrichtidentifikator;
Bestimmen einer Zieldienstinstanz aus mindestens einer Dienstinstanz der Zieldienstkomponente (102, 202) und
Senden der Dienstanforderungsnachricht an die Zieldienstinstanz; und
wobei die Dienstinstanz ausgelegt ist zum:
Empfangen der durch das Dienststeuergerät (101, 201) gesendeten Dienstanforderungsnachricht und Verarbeiten der Dienstanforderungsnachricht, wobei ein Typ der Dienstanforderungsnachricht eine Auslösenachricht ist, wobei die Auslösenachricht eine Nachricht zum Auslösen eines Netzwerkdiensts ist,
wobei das Bestimmungsmodul (502) insbesondere zum Erhalten einer Inaktivität von jeder der mindestens einen Dienstinstanz und Bestimmen einer Dienstinstanz mit der höchsten Inaktivität als die Zieldienstinstanz konfiguriert ist.

11. System nach Anspruch 10, wobei das System ferner ein Dienstbereitstellungszentrum (203) und ein Dienstregistrierungszentrum (204) umfasst;
wobei das Dienstbereitstellungszentrum (203) ausgelegt ist zum:
Bestimmen einer Entsprechung zwischen einer Dienstkomponente (102, 202) in dem Kommunikationssystem und einem Nachrichtidentifikator und Senden der Entsprechung an das Dienstregistrierungszentrum (204);
wobei das Dienstregistrierungszentrum (204) zum Empfangen und Speichern der durch das Dienstbereitstellungszentrum (203) gesendeten Entsprechung ausgelegt ist und
wobei das Dienststeuergerät (101, 201) ausgelegt ist zum:
Empfangen der Dienstanforderungsnachricht, umfassend den Nachrichtidentifikator; Erhalten der Entsprechung von dem Dienstregistrierungszentrum (204);
Bestimmen, basierend auf der Entsprechung, der Zieldienstkomponente (102, 202) entsprechend dem Nachrichtidentifikator;
Bestimmen der Zieldienstinstanz aus der mindestens einen Dienstinstanz der Zieldienstkomponente (102, 202) und
Senden der Dienstanforderungsnachricht an die Zieldienstinstanz.

## Revendications

1. Procédé de mise en œuvre de service de réseau, appliqué à un système de communication qui fournit des services de réseau incluant une gestion de mobilité, une gestion de porteuse et/ou une gestion de localisation, le système de communication comprenant un contrôleur de service (101, 201) et au moins un composant de service (202), un composant de service correspondant à un service de réseau et chaque composant de service comprenant au moins une instance de service ; et
le procédé comprenant les étapes consistant à :
recevoir, par le contrôleur de service (101, 201), un message de demande de service,
le message de demande de service comprenant un identifiant de message ;
déterminer, par le contrôleur de service (101, 201), sur la base du message de demande de service, un composant de service cible (102, 202) correspondant à l'identifiant de message ; et
déterminer, par le contrôleur de service (101, 201), une instance de service cible à partir d'au moins une instance de service du composant de service cible (102, 202) et envoyer, par le contrôleur de service, le message de demande de service à l'instance de service cible, de sorte que l'instance de service cible traite le message de demande de service,
un type du message de demande de service étant un message de déclenchement, le message de déclenchement étant un message pour déclencher un service de réseau, la détermination, par le contrôleur de service (101, 201), d'une instance de service cible à partir de l'au moins une instance de service du composant de service cible (102, 202) comprenant les étapes consistant à : obtenir, par le contrôleur de service, une inactivité de chacune de l'au moins une instance de service et déterminer qu'une instance de service avec une inactivité maximale est l'instance de service cible.

2. Procédé selon la revendication 1, dans lequel le message de demande de service comprend en outre un identifiant de terminal, et le procédé comprenant en outre, après l'envoi, par le contrôleur de service (101, 201), du message de demande de service à l'instance de service cible, l'étape consistant à :
déterminer et stocker, par le contrôleur de service (101, 201), une première correspondance parmi l'identifiant de terminal, le composant de service cible (102, 202) et l'instance de service cible.

3. Procédé selon la revendication 1, dans lequel un type du message de demande de service est un message de processus, le message de processus étant un message qui est envoyé par un utilisateur (300-301, 750-751, 1000) après l'envoi, par l'utilisateur, d'un message de déclenchement et qui est utilisé pour obtenir un service de réseau, le message de demande de service comprenant en outre un identifiant de terminal, et la détermination, par le contrôleur de service (101, 201), d'une instance de service cible à partir d'au moins une instance de service du composant de service (102, 202) comprenant les étapes consistant à :
obtenir, par le contrôleur de service (101, 201), une seconde correspondance parmi un identifiant de terminal, un composant de service (102, 202) et une instance de service ; et
déterminer, par le contrôleur de service (101, 201), l'instance de service cible sur la base de la seconde correspondance, de l'identifiant de terminal dans le message de demande de service et du composant de service cible (102, 202).

4. Procédé selon la revendication 3, le procédé comprenant en outre, après l'envoi, par le contrôleur de service (101, 201), du message de demande de service à l'instance de service cible, les étapes consistant à :
déterminer, par le contrôleur de service (101, 201), si le service de réseau se termine ; et
supprimer, par le contrôleur de service (101, 201), de la seconde correspondance, une correspondance parmi l'identifiant de terminal dans le message de demande de service, le composant de service cible (102, 202) et l'instance de service cible si un résultat de la détermination est que le service de réseau se termine.

5. Procédé selon les revendications 1 à 4, dans lequel l'envoi, par le contrôleur de service (101, 201), du message de demande de service à l'instance de service cible comprend les étapes consistant à :
obtenir, par le contrôleur de service (101, 201), une adresse de réseau de l'instance de service cible, l'adresse de réseau comprenant un des éléments suivants ou une combinaison quelconque des éléments suivants :
une adresse sur protocole Internet (IP), une adresse de contrôle d'accès au support (MAC) et un numéro de port ; et
envoyer, par le contrôleur de service (101, 201), le message de demande de service à l'instance de service cible sur la base de l'adresse de réseau.

6. Contrôleur de service (101, 201) pour un système de communication qui fournit des services de réseau incluant une gestion de mobilité, une gestion de porteuse et/ou une gestion de localisation, le contrôleur de service comprenant :
un module de réception (501), configuré pour recevoir un message de demande de service, le message de demande de service comprenant un identifiant de message ;
un module de détermination (502), configuré pour :
déterminer, sur la base du message de demande de service, un composant de service cible (102, 202) correspondant à l'identifiant de message et déterminer une instance de service cible à partir d'au moins une instance de service du composant de service cible ; et
un module d'envoi (503), configuré pour envoyer le message de demande de service à l'instance de service cible, de sorte que l'instance de service cible traite le message de demande de service,
un type du message de demande de service étant un message de déclenchement, le message de déclenchement étant un message pour déclencher un service de réseau, le module de détermination (502) étant spécifiquement configuré pour obtenir une inactivité de chacune de l'au moins une instance de service et déterminer qu'une instance de service avec une inactivité maximale est l'instance de service cible.

7. Contrôleur de service (101, 201) selon la revendication 6, le contrôleur de service comprenant en outre un module de stockage (504) ;
le module de détermination (502) étant en outre configuré pour déterminer une première correspondance parmi un identifiant de terminal, le composant de service cible (102, 202) et l'instance de service cible après l'envoi, par le module d'envoi (503), du message de demande de service à l'instance de service cible, le message de demande de service comprenant en outre l'identifiant de terminal ; et
le module de stockage (504) étant configuré pour stocker la première correspondance parmi l'identifiant de terminal, le composant de service cible (102, 202) et l'instance de service cible.

8. Contrôleur de service (101, 201) selon la revendication 6, dans lequel un type du message de demande de service est un message de processus, le message de processus étant un message qui est envoyé par un utilisateur (300-301, 750-751, 1000) après l'envoi, par l'utilisateur, d'un message de déclenchement et qui est utilisé pour obtenir un service de réseau, le message de demande de service comprenant en outre un identifiant de terminal, et le module de détermination (502) étant spécifiquement configuré pour :
obtenir une seconde correspondance parmi un identifiant de terminal, un composant de service (102, 202) et une instance de service ; et
déterminer l'instance de service cible sur la base de la seconde correspondance, de l'identifiant de terminal dans le message de demande de service et du composant de service cible (102, 202).

9. Contrôleur de service (101, 201) selon les revendications 6 à 8, dans lequel le module d'envoi (503) est spécifiquement configuré pour :
obtenir une adresse de réseau de l'instance de service cible, l'adresse de réseau comprenant un des éléments suivants ou une combinaison quelconque des éléments suivants :
une adresse sur protocole Internet (IP), une adresse de contrôle d'accès au support (MAC) et un numéro de port ; et
envoyer le message de demande de service à l'instance de service cible sur la base de l'adresse de réseau.

10. Système de communication qui fournit des services de réseau incluant une gestion de mobilité, une gestion de porteuse et/ou une gestion de localisation, le système de communication comprenant un contrôleur de service (101, 201) et au moins un composant de service (202), un composant de service correspondant à un service de réseau et chaque composant de service comprenant au moins une instance de service ; le contrôleur de service (101, 201) étant configuré pour :
recevoir un message de demande de service comprenant un identifiant de message ; déterminer un composant de service cible (102, 202) correspondant à l'identifiant de message ;
déterminer une instance de service cible à partir d'au moins une instance de service du composant de service cible (102, 202) ; et
envoyer le message de demande de service à l'instance de service cible ; et l'instance de service étant configurée pour :
recevoir le message de demande de service envoyé par le contrôleur de service (101, 201) et traiter le message de demande de service,
un type du message de demande de service étant un message de déclenchement, le message de déclenchement étant un message pour déclencher un service de réseau,
le module de détermination (502) étant spécifiquement configuré pour obtenir une inactivité de chacune de l'au moins une instance de service et déterminer qu'une instance de service avec une inactivité maximale est l'instance de service cible.

11. Système selon la revendication 10, le système comprenant en outre un centre de déploiement de service (203) et un centre d'enregistrement de service (204) ;
le centre de déploiement de service (203) étant configuré pour :
déterminer une correspondance entre un composant de service (102, 202) dans le système de communication et un identifiant de message et envoyer la correspondance au centre d'enregistrement de service (204) ;
le centre d'enregistrement de service (204) étant configuré pour recevoir et stocker la correspondance envoyée par le centre de déploiement de service (203) ; et
le contrôleur de service (101, 201) étant configuré pour :
recevoir le message de demande de service comprenant l'identifiant de message ; obtenir la correspondance auprès du centre d'enregistrement de service (204) ; déterminer, sur la base de la correspondance, le composant de service cible (102, 202) correspondant à l'identifiant de message ;
déterminer l'instance de service cible à partir de l'au moins une instance de service du composant de service cible (102, 202) ; et
envoyer le message de demande de service à l'instance de service cible.
